# EUROPEAN PATENT APPLICATION

(11) **EP 4 438 643 A1**
(43) Date of publication of application: **02.10.2024**
(21) Application number: 22898608.9
(22) Date of filing: 24.11.2022
(51) Int. Cl.: C08F 255/02, C08L 51/06, C08L 69/00, C08L 101/00

(54) **GRAFT COPOLYMER AND THERMOPLASTIC RESIN COMPOSITION**

(30) Priority: 26.11.2021 JP 2021192021
(71) Applicant: Nippon A&L Inc., Osaka-shi, Osaka 541-8550 (JP)
(72) Inventor: AKAKI, Kazuto, Niihama-shi, Ehime 792-0801 (JP); YUKAWA, Taisuke, Niihama-shi, Ehime 792-0801 (JP); KUMADANI, Hitoshi, Niihama-shi, Ehime 792-0801 (JP)
(74) Representative: Vossius & Partner Patentanwälte Rechtsanwälte mbB
(86) International application number: PCT/JP2022/043333
(87) International publication number: WO 2023/095826

(57) **Abstract**

A graft copolymer (A) obtained by graft-copolymerizing 20 to 70 parts by mass of a monomer composition including an aromatic vinyl-based monomer (b) in the presence of 30 to 80 parts by mass of an ethylene-based polymer (a) (provided that the total amount of the ethylene-based polymer (a) and the monomer composition is 100 parts by mass), in which the ethylene-based polymer (a) has a gas generation amount of 2500 ppm by mass or less when heated at 270°C for 6 minutes.

## Description

### Technical Field

The present disclosure relates to a graft copolymer and a thermoplastic resin composition having the graft copolymer blended therein.

### Background Art

Thermoplastic resins, which are represented by styrene-based resins, are used as materials for vehicle interior components such as switches for car air-conditioners and car audio systems as vehicle interior components. It is well known that in a case in which molded articles produced using thermoplastic resins are assembled, not only interlocking parts of the molded articles or parts that are brought into contact with (rubbed with) components formed from materials of different kinds or materials of the same kind produce creaking sound, but also components wear away after being used for a long time.

In order to solve such problems, application of grease on the interlocking parts or contact parts of resin surfaces is implemented. However, since this application of grease requires time and expenses for operation, it is not economically efficient, and there are limitations on the sustenance of effects. Thus, a technology of blending a polyethylene-based polymer into a thermoplastic resin composition has been proposed (for example, Patent Literatures 1 and 2).

### Citation List

### Patent Literature

Patent Literature 1: Japanese Unexamined Patent Publication No. 2000-038513
Patent Literature 2: Japanese Unexamined Patent Publication No. H4-020550

### Summary of Invention

### Technical Problem

Meanwhile, a thermoplastic resin composition is molded into a vehicle interior component or the like by using a mold. However, studies conducted by the inventors of the present invention have revealed that when a thermoplastic resin composition having a polyethylene-based polymer blended therein is continuously molded, deposits may be generated on the mold. When molding is continued in a state of having deposits on the mold, poor appearance of the molded article becomes a problem. When the molding temperature becomes higher (for example, 270°C), deposits are generated in a short period of time, and productivity is impaired.

It is an object of an aspect of the present disclosure to provide a graft copolymer that is less likely to contaminate a mold during molding even when blended with a thermoplastic resin, and a thermoplastic resin composition having the graft copolymer blended therein.

### Solution to Problem

In order to solve the above-described problems, the inventors of the present invention conducted a thorough investigation, and as a result, the inventors found that a thermoplastic resin composition blended with a specific graft copolymer obtained by using an ethylene-based polymer whose gas generation amount per unit mass is equal to or less than a specific amount, is less likely to contaminate a mold even in a case where molding is performed at a high temperature (for example, 270°C), thus completing the present disclosure based on this knowledge.

That is, an aspect of the present disclosure is a graft copolymer (A) obtained by graft-polymerizing 20 to 70 parts by mass of a monomer composition including an aromatic vinyl-based monomer in the presence of 30 to 80 parts by mass of an ethylene-based polymer (a) (provided that a total amount of the ethylene-based polymer (a) and the monomer composition is 100 parts by mass), in which the ethylene-based polymer (a) has a gas generation amount of 2500 ppm by mass or less when heated at 270°C for 6 minutes.

According to an embodiment, the monomer composition may further include a vinyl cyanide-based monomer.

According to an embodiment, the graft copolymer may have a graft ratio of 30% or greater. When the graft ratio is 30% or greater, contamination of a mold is further suppressed.

Another aspect of the present disclosure is a thermoplastic resin composition including the above-described graft copolymer (A) and a thermoplastic resin (B) other than the graft copolymer (A), in which a content of the graft copolymer (A) is 1 to 10 parts by mass, and a content of the thermoplastic resin (B) is 90 to 99 parts by mass, with respect to a total amount of 100 parts by mass of the graft copolymer (A) and the thermoplastic resin (B).

According to an embodiment, the thermoplastic resin (B) may include a thermoplastic resin having a glass transition temperature of 130°C or higher. By including a thermoplastic resin having a glass transition temperature of 130°C or higher, heat resistance of a resulting molding article is improved.

According to an embodiment, the thermoplastic resin (B) may include a polycarbonate-based resin. As the thermoplastic resin (B) includes a polycarbonate-based resin, heat resistance of a resulting molded article is improved.

### Advantageous Effects of Invention

According to an aspect of the present disclosure, there are provided a graft copolymer that is less likely to contaminate a mold during molding even when blended with a thermoplastic resin, and a thermoplastic resin composition having the graft copolymer blended therein.

### Description of Embodiments

### [Graft copolymer]

The graft copolymer related to an embodiment of the present disclosure will be described in detail.

The graft copolymer related to the present embodiment is a graft copolymer (A) obtained by graft-polymerizing 20 to 70 parts by mass of a monomer composition including an aromatic vinyl-based monomer (b) in the presence of 30 to 80 parts by mass of an ethylene-based polymer (a) (provided that the total amount of the ethylene-based polymer (a) and the monomer composition is 100 parts by mass).

Examples of the ethylene-based polymer (a) include polymers having a monomer unit based on ethylene as a main unit (usually, when the total amount of monomer units constituting the polymer is taken as 100 mol%, the content of the monomer unit based on ethylene is 50 mol% or more), such as an ethylene homopolymer, an ethylene-α-olefin copolymer, an ethylene-vinyl acetate copolymer, an ethylene-acrylic acid copolymer, an ethylene-acrylic acid ester copolymer, an ethylene-methacrylic acid copolymer, an ethylene-methacrylic acid ester copolymer, and an ethylene-cyclic olefin copolymer.

The ethylene homopolymer may be polyethylene. Furthermore, examples of the α-olefin of the ethylene-α-olefin copolymer include α-olefins having 3 to 20 carbon atoms, such as propylene, 1-butene, 1-pentene, 1-hexene, 1-heptene, 1-octene, 1-nonene, 1-decene, 1-dodecene, 4-methyl-1-pentene, and 4-methyl-1-hexene. Regarding these, one kind thereof can be used alone, or two or more kinds thereof can be used in combination.

Examples of the ethylene-α-olefin copolymer include an ethylene-propylene copolymer, an ethylene-1-butene copolymer, an ethylene-1-hexene copolymer, an ethylene-1-octene copolymer, and an ethylene-1-butene-1-hexene copolymer.

The ethylene-α-olefin copolymer may include a monomer unit based on a non-conjugated diene monomer. Examples of the non-conjugated diene monomer include dicyclopentadiene, 5-ethylidene-2-norbornene, 1,4-hexadiene, 1,5-hexadiene, 2-methyl-1,5-hexadiene, 1,4-cycloheptadiene, and 1,5-cyclooctadiene.

There are no limitations on the size of the ethylene-based polymer (a); however, the number average particle size [(long side + short side)/2] (µm) is preferably 500 to 4,500 µm, more preferably 700 to 3,500 µm, even more preferably 1,000 to 3,000 µm, and particularly preferably 1,000 to 2,700 µm. The number average particle size is the average value of [(long side + short side)/2] of a plurality of ethylene-based polymers (a).

The ethylene-based polymer (a) can be used in the form of pellets. In this case, as the surface area of the pellets is larger, it is easier for the monomers such as an aromatic vinyl-based monomer to be graft-polymerized. The number average particle size [(long side + short side)/2] of the pellets is preferably in the range described above.

The density of the ethylene-based polymer (a) is preferably 0.850 g/cm³ or more and less than 0.965 g/cm³, more preferably 0.870 g/cm³ or more and less than 0.950 g/cm³, and particularly preferably 0.900 g/cm³ or more and less than 0.935 g/cm³. Incidentally, the density is measured according to JIS K7112.

The ethylene-based polymer (a) is such that the gas generation amount when the ethylene-based polymer (a) is heated at 270°C for 6 minutes is 2500 ppm by mass or less, and from the viewpoint that contamination of the mold is further suppressed, the gas generation amount is preferably 2000 ppm by mass or less, more preferably 1500 ppm by mass or less, and even more preferably 1000 ppm by mass or less. The gas generation amount is measured by gas chromatography mass spectrometry under the following conditions.

### (Conditions for gas chromatography mass spectrometry)

Analytical column: column with a stationary phase of 5% diphenyldimethylpolysiloxane (film thickness 0.25 µm × length 30 m × inner diameter 0.25 mm)
Conditions for gas generation and peak to be measured: a sample (ethylene-based polymer) was introduced into an oven at a temperature of 270°C, and the gas generated while the sample was maintained at 270°C for 6 minutes was defined as the gas generated from the sample (ethylene-based polymer).
Inlet port temperature: 320°C
Amount of sample to be introduced: 3.0 to 3.5 mg
Carrier gas: Helium
Gas flow rate: 1 mL/min
Detector and detection temperature: MSD, 320°C

The method of adjusting the gas generation amount of the ethylene-based polymer when heated at 270°C for 6 minutes to 2500 ppm by mass or less may be, for example, a combination of at least two of the following gas generation amount-reducing means 1 to 3.
Reducing means 1: using a catalyst system composed of a cyclopentadienyl-transition metal compound and an alumoxane compound when producing the ethylene-based polymer
Reducing means 2: lowering the polymerization temperature when producing the ethylene-based polymer
Reducing means 3: washing the ethylene-based polymer (for example, extracting an extremely low molecular weight polymer component from the ethylene-based polymer by using a solvent (n-hexane or the like))

Examples of the aromatic vinyl-based monomer (b) include styrene, α-methylstyrene, para-methylstyrene, and bromostyrene. Regarding these, one kind thereof can be used alone, or two or more kinds thereof can be used in combination. Among these, styrene and α-methylstyrene are preferred.

The monomer composition may further include a vinyl cyanide-based monomer. Examples of the vinyl cyanide-based monomer (c) include acrylonitrile, methacrylonitrile, ethacrylonitrile, and fumaronitrile. Regarding these, one kind thereof can be used alone, or two or more kinds thereof can be used in combination.

The graft copolymer (A) of the present embodiment can be obtained by graft-polymerizing 20 to 70 parts by mass of a monomer composition including an aromatic vinyl-based monomer (b) in the presence of 30 to 80 parts by mass of an ethylene-based polymer (a) (provided that the total amount of the ethylene-based polymer (a) and the monomer composition is 100 parts by mass).

When the amount of presence of the ethylene-based polymer (a) is 30 parts by mass or more, the sliding characteristics tend to be improved at the time of blending the obtained graft copolymer (A) with a thermoplastic resin, and when the amount of presence is 80 parts by mass or less, delamination is less likely to occur at the time of blending the obtained graft copolymer (A) with a thermoplastic resin. The amount of presence of the ethylene-based polymer (a) is preferably 35 to 75 parts by mass, and more preferably 40 to 70 parts by mass.

With regard to the graft copolymer (A) of the present embodiment, the aromatic vinyl-based monomer (b) is preferably graft-polymerized at a proportion of 65 to 85 parts by mass, and is more preferably graft-polymerized at a proportion of 70 to 80 parts by mass, based on 100 parts by mass of the monomer composition.

From the viewpoint that contamination of the mold is further suppressed, the graft ratio of the graft copolymer (A) is preferably 30% or greater, more preferably 35% or greater, even more preferably 40% or greater, and particularly preferably 45% or greater.

Furthermore, in a case where the monomer composition includes a vinyl cyanide-based monomer, the blending amount of the vinyl cyanide-based monomer is preferably 15 to 35 parts by mass, and more preferably 20 to 30 parts by mass, based on 100 parts by mass of the monomer composition.

There are no particular limitations on the method for producing the graft copolymer (A) of the present embodiment, and the graft copolymer (A) can be obtained by emulsion polymerization, suspension polymerization, bulk polymerization, solution polymerization, or a combination of these methods. However, it is preferable to use a suspension polymerization method.

In the present embodiment, a step A of measuring the gas generation amount of an ethylene-based polymer by the above-mentioned gas chromatography mass spectrometry, and a step B of determining that in a case where the gas generation amount measured in step A has a predetermined value (for example, 2500 ppm by mass or less, 2000 ppm by mass or less, 1500 ppm by mass or less, or 1000 ppm by mass or less), the ethylene-based polymer is used as the ethylene-based polymer (a), may be carried out.

### [Thermoplastic resin composition]

The thermoplastic resin composition related to an embodiment of the present disclosure will be described in detail.

The thermoplastic resin composition of the present embodiment includes the graft copolymer (A) of the above-described embodiment and a thermoplastic resin (B) other than the graft copolymer (A).

There are no particular limitations on the type of the thermoplastic resin (B), and examples thereof include a styrene-based resin; an acrylic resin such as a polymethyl methacrylate resin; a polycarbonate-based resin; a polyester-based resin such as a polybutylene terephthalate resin or a polyethylene terephthalate resin; a polyamide-based resin; a biodegradable resin such as a polylactic acid resin; and engineering plastics such as a (modified) polyphenylene ether-based resin, a polyoxymethylene-based resin, a polysulfone-based resin, a polyallylate-based resin, a polyphenylene-based resin, and a thermoplastic polyurethane-based resin. Regarding these, one kind thereof can be used alone, or two or more kinds thereof can be used in combination. Among them, it is preferable that the thermoplastic resin (B) includes a polycarbonate-based resin, from the viewpoint that heat resistance of a resulting molded article is improved. In a case where the thermoplastic resin (B) includes a polycarbonate-based resin, molding at a high temperature is required; however, since the thermoplastic resin composition related to the present embodiment includes the graft copolymer related to the above-described embodiment, the thermoplastic resin composition is less likely to contaminate the mold.

Examples of the styrene-based resin include a rubber-reinforced styrene-based resin and a non-rubber-reinforced styrene-based resin.

Specific examples of the rubber-reinforced styrene-based resin include a rubber-reinforced polystyrene resin (HIPS resin), an acrylonitrile-butadiene-based rubber-styrene polymer (ABS resin), an acrylonitrile-acrylic rubber-styrene polymer (AAS resin), and a methyl methacrylate-butadiene-based rubber-styrene resin (MBS resin).

Specific examples of the non-rubber-reinforced styrene-based resin include a styrene polymer (PS resin), a styrene-acrylonitrile copolymer (AS resin), an α-methylstyrene-acrylonitrile copolymer (αMS-ACN resin), a methyl methacrylate-styrene copolymer (MS resin), a methyl methacrylate-acrylonitrile-styrene copolymer (MAS resin), a styrene-N-phenylmaleimide copolymer (S-NPMI resin), and a styrene-N-phenylmaleimide-acrylonitrile copolymer (S-A-NPMI resin).

The polycarbonate-based resin that can be used for the present embodiment is a polymer obtainable by a phosgene method of reacting various dihydroxydiaryl compounds with phosgene, or a transesterification method of reacting a dihydroxydiaryl compound with a carbonic acid ester such as diphenyl carbonate, and a representative example may be a polycarbonate-based resin produced from "bisphenol A", which is 2,2-bis(4-hydroxyphenyl)propane.

Examples of the dihydroxydiaryl compound include, in addition to bisphenol A, bis(hydroxyaryl)alkanes such as bis(4-hydroxydiphenyl)methane, 1,1-bis(4-hydroxyphenyl)ethane, 2,2-bis(4-hydroxyphenyl)butane, 2,2-bis(4-hydroxyphenyl)octane, bisbis(4-hydroxydiphenyl)phenylmethane, 2,2-bis(4-hydroxydiphenyl-3-methylphenyl)propane, 1,1 -bis(4-hydroxy-3 -tertiary butylphenyl)propane, 2,2-bis(4-hydroxy-3-bromophenyl)propane, 2,2-bis(4-hydroxy-3,5dibromophenyl)propane, and 2,2-bis(4-hydroxy-3,5-dichlorophenyl)propane; bis(hydroxyaryl)cycloalkanes such as 1,1-bis(4-hydroxyphenyl)cyclopentane and 1,1-bis(4-hydroxyphenyl)cyclohexane; dihydroxydiaryl ethers such as 4,4'-dihydroxydiphenyl ether and 4,4'-dihydroxy-3,3'-dimethyldiphenyl ether; dihydroxydiaryl sulfides such as 4,4'-dihydroxydiphenyl sulfide and 4,4'-dihydroxy-3,3'-dimethyldiphenyl sulfide; dihydroxydiaryl sulfoxides such as 4,4'-dihydroxydiphenyl sulfoxide; and dihydroxydiarylsulfones such as 4,4'-dihydroxydiphenylsulfone and 4,4'-dihydroxy-3,3'-dimethyldiphenylsulfone. Regarding these, one kind thereof can be used alone, or two or more kinds thereof can be used in combination.

In addition to those described above, piperazine, dipiperidylhydroquinone, resorcin, 4,4'-dihydroxydiphenyls, and the like may also be mixed.

Furthermore, mixtures of the above-described dihydroxydiaryl compounds and trivalent or higher-valent phenol compounds disclosed below may also be used. Examples of the trivalent or higher-valent phenols include phloroglucin, 4,6-dimethyl-2,4,6-tri-(4-hydroxyphenyl)-heptene-2,4,6-dimethyl-2,4,6-tri-(4-hydroxyphenyl)-heptane, 1,3,5-tri-(4-hydroxyphenyl)-benzole, 1,1,1-tri-(4-hydroxyphenyl)-ethane, and 2,2-bis-(4,4'-(4,4'-hydroxydiphenyl)cyclohexyl)-propane.

In a case in which the above-described polycarbonate-based resin is produced, the weight average molecular weight is usually 10000 to 80,000, and preferably 15000 to 60000. During the production, a molecular weight adjusting agent, a catalyst, and the like can be used as necessary.

In a case where the thermoplastic resin (B) Includes a polycarbonate-based resin, from the viewpoint that heat resistance is improved, the content of the polycarbonate-based resin is preferably 50% by mass or more, more preferably 70% by mass or more, and even more preferably 90% by mass or more, based on the total amount of the thermoplastic resin. When a polycarbonate-based resin having a high glass transition temperature is used, molding at a high temperature is required, and the mold tends to be easily contaminated; however, the thermoplastic resin composition of the present embodiment can suppress contamination of the mold even when subjected to molding at a high temperature.

From the viewpoint of having more excellent heat resistance, it is preferable that the thermoplastic resin (B) includes a thermoplastic resin having a glass transition temperature of 130°C or higher, and it is more preferable that the thermoplastic resin (B) includes a thermoplastic resin having a glass transition temperature of 140°C or higher. The glass transition temperature is measured by differential scanning calorimetry (DSC).

In a case where the thermoplastic resin (B) includes a thermoplastic resin having a glass transition temperature of 130°C or higher, from the viewpoint that heat resistance is improved, the content of the thermoplastic resin having a glass transition temperature of 130°C or higher is preferably 50% by mass or more, more preferably 70% by mass or more, and even more preferably 90% by mass or more, based on the total amount of the thermoplastic resin. When a thermoplastic resin having a high glass transition temperature is used, molding at a high temperature is required, and the mold tends to be easily contaminated; however, the thermoplastic resin composition of the present embodiment can suppress contamination of the mold even when subjected to molding at a high temperature.

With regard to the thermoplastic resin composition of the present embodiment, it is preferable that, with respect to a total amount of 100 parts by mass of the graft copolymer (A) and the thermoplastic resin (B), the content of the graft copolymer (A) is 1 to 10 parts by mass, and the content of the thermoplastic resin (B) is 90 to 99 parts by mass. When the content of the graft copolymer (A) is 1 part by mass or more, a resulting molded article is less likely to undergo delamination and tends to be able to ameliorate abrasion resistance, sliding characteristics, and creaking sound while sufficiently maintaining heat resistance. The content of the graft copolymer (A) is more preferably 2 to 8 parts by mass, and particularly preferably 3 to 7 parts by mass, with respect to a total amount of 100 parts by mass of the graft copolymer (A) and the thermoplastic resin (B).

From the viewpoint that contamination of the mold is further suppressed, the content of a structure derived from the ethylene-based polymer (a) of the graft copolymer (A) in the thermoplastic resin composition is preferably 0.6 to 6.0% by mass, more preferably 1.2 to 4.8% by mass, and even more preferably 1.8 to 4.2% by mass, based on the total amount of the thermoplastic resin composition.

As long as the purpose of the present disclosure is not impaired, the thermoplastic resin composition of the present embodiment can be incorporated thereinto known additives such as a pigment, a dye, a reinforcing agent (talc, mica, clay, glass fibers, or the like), an ultraviolet absorber, an oxidation inhibitor, a lubricating agent, a mold release agent, a plasticizer, a flame retardant, an antistatic agent, and inorganic and organic antibacterial agents, at the time of mixing of resins, at the time of molding, or the like according to the purpose.

The thermoplastic resin composition of the present embodiment can be obtained by mixing the components described above. For the mixing, for example, known kneading apparatuses such as an extruder, a roll, a Banbury mixer, and a kneader can be used. Also, there are no limitations on the order of mixing.

### (Operating effect)

The graft copolymer related to the above-described embodiment is obtained by blending a monomer composition including an aromatic vinyl-based monomer (b) at a specific proportion in the presence of an ethylene-based polymer (a) and graft-polymerizing the blend, and when the ethylene-based polymer (a) has a gas generation amount per unit mass of 2500 ppm by mass or less, a thermoplastic resin composition blended with the graft copolymer is less likely to contaminate the mold even when subjected to molding at a high temperature (for example, 270°C). In addition, a molded article obtained from the thermoplastic resin composition is less likely to undergo delamination while maintaining heat resistance, allows sufficient abrasion resistance and sliding characteristics to be obtained, and can suppress creaking sound.

### Examples

The present disclosure will be specifically described below by way of Examples; however, the present disclosure is not intended to be limited by these.

### <Preparation of ethylene-based polymer>

The following ethylene-based polymers (a-1) to (a-3) were prepared. The gas generation amount of each ethylene-based polymer was measured by the method that will be described below.

### [Ethylene-based polymer (a-1)]

### (Ethylene-1-hexene copolymer)

Gas generation amount [ppm by mass]: 890
Density: 0.903 g/cm³

### [Ethylene-based polymer (a-2)]

### (Ethylene homopolymer)

Gas generation amount [ppm by mass]: 340
Density: 0.919 g/cm³

### [Ethylene-based polymer (a-3)]

### (Ethylene-1-butene-1-hexene copolymer)

Gas generation amount [ppm by mass]: 4830
Density: 0.918 g/cm³

### [Measurement of gas generation amount]

The gas generation amount was measured by gas chromatography mass spectrometry under the following conditions.
Apparatus: model "7890A GC System/5975C VL MSD", manufactured by Agilent Technologies.
Analytical column: trade name "Ultra ALLOY-5", length (30 m) × inner diameter (0.25 mm) × film thickness (0.25 µm), the stationary phase was 5% diphenyldimethylpolysiloxane
Oven temperature: temperature was raised from 70°C to 270°C at a rate of 20°C/min and then maintained at 270°C for 6 minutes. Furthermore, the temperature was raised to 320°C at a rate of 20°C/min and maintained at 320°C for 10 minutes.
Inlet port temperature: 320°C
GC interface temperature: 320°C
Carrier gas: Helium (flow rate: 1 mL/min)
Split ratio: 1/150
Detector and detection temperature: MSD, 320°C
Amount of sample to be introduced: 3.0 to 3.5 mg

Conditions for gas generation and peak to be measured: a sample (ethylene-based polymer) was introduced into an oven at a time point where the oven temperature reached 270°C, and the gas generated while the temperature of the oven was maintained at 270°C for 6 minutes was defined as the gas generated from the sample (ethylene-based polymer).

### <Production of graft copolymer (A)>

### [Graft copolymer (A-1)]

500 parts by mass of deionized water, 0.20 parts by mass of polyoxyethylene polyoxypropylene glycol (trade name: "PLURONIC F-68"), 1.0 part by mass of magnesium sulfate, and 100 parts by mass of the ethylene-based polymer (a-1) were introduced into a 100 L pressure-resistant container, and the inside of the tank was purged with nitrogen while the contents were stirred. Thereafter, a monomer mixture composed of 45.5 parts by mass of styrene, 21.5 parts by mass of acrylonitrile, 1.78 parts by mass of tert-butyl peroxypivalate (B(PV)), 0.14 parts by mass of tert-butyl peroxy-2-ethylhexanoate (trade name: "KAYA ESTER O"), and 0.07 parts by mass of 1,4-benzoquinone, and 50 parts by mass of deionized water were introduced therein, and the inside of the tank was pressurized to 0.1 kg/cm³. The temperature inside the tank was raised to 85°C, and then after the temperature reached 85°C, a reaction was continued for 1 hour. The temperature was raised to 100°C during 1 hour of the reaction, and after the temperature rise, the reaction was performed at 100°C. After completion of the reaction, the temperature inside the tank was cooled to 40°C, and collection, washing, and drying were performed to obtain a graft copolymer (A-1). Measurement of the graft ratio was performed by a method as described below, and the graft ratio was 52.3%.

### [Graft copolymer (A-2)]

A graft copolymer (A-2) was obtained in the same manner as in the case of the graft copolymer (A-1), except that the ethylene-based polymer (a-2) was used instead of the ethylene-based polymer (a-1). The graft ratio was 49.5%.

### [Graft copolymer (A-3)]

A graft copolymer (A-3) was obtained in the same manner as in the case of the graft copolymer (A-1), except that the ethylene-based polymer (a-3) was used instead of the ethylene-based polymer (a-1). The graft ratio was 47.5%.

### <Measurement of graft ratio of graft copolymer>

The ethylene-based polymer content percentage (%) of the graft copolymer and the mass ratio (%) of a dichloromethane-insoluble portion of the graft copolymer were measured, and the graft ratio was determined. This will be described by taking the graft copolymer (A-1) as an example. It is assumed that 100% of the charged amount of the ethylene-based polymer (a-1) is included in the graft copolymer. The mass ratio of the dichloromethane-insoluble portion was determined by subjecting the graft copolymer (A-1) to a fractionation operation by using dichloromethane, and the mass ratio was 91.4% by mass. Since the ethylene-based polymer exists in the dichloromethane-insoluble portion, the graft ratio can be determined by the following Formula (1). Graft ratio (%) = [{Mass ratio (% by mass) of dichloromethane- insoluble portion - Content percentage (% by mass) of ethylene-based polymer in graft copolymer}/Content percentage (% by mass) of ethylene-based polymer in graft copolymer] × 100
= (91.4 - 60)/60
= 52.3 (%)

### [Production of rubber-like polymer (b-1)]

93 parts by mass of 1,3-butadiene, 7 parts by mass of styrene, 0.5 parts by mass of n-dodecyl mercaptan, 0.24 parts by mass of potassium persulfate, 1.5 parts by mass of sodium rosinate, 0.1 parts by mass of sodium hydroxide, and 150 parts by mass of deionized water were introduced into a pressure-resistant container, and the mixture was allowed to react at 70°C for 15 hours. Thereafter, the reaction was terminated by cooling, and thereby a rubber-like polymer (b-1) was obtained. The obtained rubber-like polymer (b-1) was stained with osmium tetroxide, dried, and then photographed using a transmission electron microscope. The areas of 1000 rubber particles were measured by using an image analysis processing apparatus (apparatus name: IP-1000PC, manufactured by Asahi Kasei Corp.), the equivalent circle diameters (diameters) thereof were determined, and the weight average particle size of the rubber-like polymer (b-1) was calculated. The weight average particle size was 0.10 µm.

### [Production of rubber-like polymer (b-2)]

An agglomeration and enlargement treatment was performed using the rubber-like polymer (b-1) obtained as described above. 270 parts by mass of the rubber-like polymer (b-1) and 0.055 parts by mass of a 10% aqueous solution of sodium dodecyl benzenesulfonate were introduced into a stirring tank, the mixture was stirred for 10 minutes, and then 0.8 parts by mass of a 5% aqueous solution of phosphoric acid was added thereto over 10 minutes. Thereafter, 1.0 part by mass of a 10% aqueous solution of potassium hydroxide was added thereto, and thereby a rubber-like polymer (b-2) was obtained. For the obtained rubber-like polymer (b-2), the weight average particle size was determined by the same method as described above, and the weight average particle size was 0.35 µm.

### [Production of thermoplastic resin (B-1)]

60 parts by mass (solid content) of the rubber-like polymer (b-2) (weight average particle size: 0.35 µm), 140 parts by mass of water, 0.1 parts by mass of ethylenediaminetetraacetic acid disodium salt, 0.001 parts by mass of ferrous sulfate, and 0.3 parts by mass of sodium formaldehyde sulfoxylate were introduced into a nitrogen-purged reactor, the mixture was heated to 65°C, and then a mixture composed of 30 parts by mass of styrene, 10 parts by mass of acrylonitrile, 0.27 parts by mass of t-dodecyl mercaptan, and 0.139 parts by mass of t-butyl hydroperoxide, and a mixture composed of 1.0 part by mass of potassium oleate and 15 parts by mass of water were continuously added thereto over 5 hours. After completion of the addition, polymerization was performed for 2 hours while further increasing the temperature to 70°C. Thereafter, the resultant was subjected to salting out, dehydration, and drying, and a thermoplastic resin (B-1), which was an acrylonitrile-butadiene-based rubber-styrene resin, was obtained. The glass transition temperature originating from the AS resin was 110°C.

### <Production of thermoplastic resin composition>

### [Examples 1 to 3]

The graft copolymer (A) and the thermoplastic resin (B) were melt kneaded at the compositions shown in Table 1, and thermoplastic resin compositions were obtained. The thermoplastic resin (B-1) and PC1 and PC2 shown below were used as the thermoplastic resin (B).
· PC1: polycarbonate-based resin, viscosity average molecular weight: 15,000, glass transition temperature: 141°C
· PC2: polycarbonate-based resin, viscosity average molecular weight: 20,500, glass transition temperature: 155°C

### [Comparative Examples 1 to 4]

The graft copolymer (A), the ethylene-based polymer, and the thermoplastic resin (B) were mixed at the compositions shown in Table 1, and thermoplastic resin compositions were obtained.

### <Evaluation of contamination of mold>

### [Example 1]

The graft copolymer (A) and the thermoplastic resin (B) were mixed at the composition shown in Table 1, and a thermoplastic resin composition was obtained. A molded article was produced with a mold (two sheets each having a size of 90 mm in length × 55 mm in width × 3 mm in thickness taken together) by using the thermoplastic resin composition. The molding temperature was set to 270°C, and the mold temperature was set to 70°C. Contamination of the mold after producing the molded article for 600 consecutive shots was evaluated according to the following criteria. The results are shown in Table 1.

### (Evaluation criteria)

A: the area where deposits are recognized on the mirror surface of the mold is 40% or less.
B: the area where deposits are recognized on the mirror surface of the mold is more than 40%.

### [Examples 2 and 3 and Comparative Examples 1 to 4]

Molded articles were produced in the same manner as in Example 1, and contamination of the mold after producing the molded article for 600 consecutive shots was evaluated by visual inspection according to the above-described determination criteria. The results are shown in Table 1.

**[Table 1]**

| | | | Example 1 | Example 2 | Example 3 | Comparative Example 1 | Comparative Example 2 | Comparative Example 3 | Comparative Example 4 |
|---|---|---|---|---|---|---|---|---|---|
| Composition (parts by mass) | Graft copolymer (A) | A-1 | 5 | 0 | 5 | 0 | 0 | 0 | 0 |
| | | A-2 | 0 | 5 | 0 | 0 | 0 | 0 | 0 |
| | | A-3 | 0 | 0 | 0 | 5 | 0 | 0 | 0 |
| | Ethylene-based polymer | a-1 | 0 | 0 | 0 | 0 | 3 | 0 | 0 |
| | | a-2 | 0 | 0 | 0 | 0 | 0 | 3 | 0 |
| | | a-3 | 0 | 0 | 0 | 0 | 0 | 0 | 3 |
| | Thermoplastic resin (B) | PC1 | 100 | 100 | 0 | 100 | 100 | 100 | 100 |
| | | PC2 | 0 | 0 | 50 | 0 | 0 | 0 | 0 |
| | | B-1 | 0 | 0 | 50 | 0 | 0 | 0 | 0 |
| Evaluation | Mold contaminability | | A | A | A | B | B | B | B |

The gist of the present disclosure lies in the following [1] to [6].
[1] A graft copolymer (A) obtained by graft-polymerizing 20 to 70 parts by mass of a monomer composition including an aromatic vinyl-based monomer (b) in the presence of 30 to 80 parts by mass of an ethylene-based polymer (a) (provided that a total amount of the ethylene-based polymer (a) and the monomer composition is 100 parts by mass),
   in which the ethylene-based polymer (a) has a gas generation amount of 2500 ppm by mass or less when heated at 270°C for 6 minutes.
[2] The graft copolymer according to [1], in which the monomer composition further includes a vinyl cyanide-based monomer (c).
[3] The graft copolymer according to [1] or [2], in which a graft ratio is 30% or greater.
[4] A thermoplastic resin composition including the graft copolymer (A) according to any one of [1] to [3] and a thermoplastic resin (B) other than the graft copolymer (A),
   in which, with respect to a total amount of 100 parts by mass of the graft copolymer (A) and the thermoplastic resin (B), a content of the graft copolymer (A) is 1 to 10 parts by mass, and a content of the thermoplastic resin (B) is 90 to 99 parts by mass.
[5] The thermoplastic resin composition according to [4], in which the thermoplastic resin (B) includes a thermoplastic resin having a glass transition temperature of 130°C or higher.
[6] The thermoplastic resin composition according to [4] or [5], in which the thermoplastic resin (B) includes a polycarbonate-based resin.

## Claims

1. A graft copolymer (A) obtained by graft-polymerizing 20 to 70 parts by mass of a monomer composition including an aromatic vinyl-based monomer (b) in the presence of 30 to 80 parts by mass of an ethylene-based polymer (a) (provided that a total amount of the ethylene-based polymer (a) and the monomer composition is 100 parts by mass),
wherein the ethylene-based polymer (a) has a gas generation amount of 2500 ppm by mass or less when heated at 270°C for 6 minutes.

2. The graft copolymer according to claim 1, wherein the monomer composition further includes a vinyl cyanide-based monomer (c).

3. The graft copolymer according to claim 1, wherein a graft ratio is 30% or greater.

4. A thermoplastic resin composition comprising the graft copolymer (A) according to any one of claims 1 to 3 and a thermoplastic resin (B) other than the graft copolymer (A),
wherein, with respect to a total amount of 100 parts by mass of the graft copolymer (A) and the thermoplastic resin (B), a content of the graft copolymer (A) is 1 to 10 parts by mass, and a content of the thermoplastic resin (B) is 90 to 99 parts by mass.

5. The thermoplastic resin composition according to claim 4, wherein the thermoplastic resin (B) includes a thermoplastic resin having a glass transition temperature of 130°C or higher.

6. The thermoplastic resin composition according to claim 4, wherein the thermoplastic resin (B) includes a polycarbonate-based resin.
